# EUROPEAN PATENT APPLICATION

(11) **EP 1 182 102 A1**
(43) Date of publication of application: **27.02.2002**
(21) Application number: 00307131.3
(22) Date of filing: 21.08.2000
(51) Int. Cl.: B60R 25/02

(54) **Theft prevention device for automobiles**

(71) Applicant: Sombatjirakal, Chalermpong, Bangkok-Yai, Bangkok 10600 (TH)
(72) Inventor: The designation of the inventor has not yet been filed
(74) Representative: Dunlop, Brian Kenneth Charles

(57) **Abstract**

A theft prevention device for vehicles having steering wheels comprises a tubular metal head portion (100) having a longitudinal slot (8) adapted to fit over part of the annulus of a steering wheel (2). The head portion is connected to a handle (11) which includes a rotatable shaft (10), rotatably connected to a part cylindrical rotatable steering wheel locking sleeve assembly (4) having a locking protrusion (41) which can be selectively rotated behind the annulus of the steering wheel and locked in place by means of a lock (2) at the end of the head portion (100) remote from the handle (11). This makes it easy to fit the device to a steering wheel and to unlock it therefrom whilst at the same time retaining the advantages of prior art devices preventing complete rotation of the steering wheel with the device attached.

## Description

This invention relates to theft prevention devices for vehicles such as automobiles.

With conventional, theft prevention devices for automobiles, especially of the steering wheel attached type in various forms, such as T-shaped, there is often a difficulty in attaching it to a steering wheel. It can also be inconvenient to detach from the steering wheel because of e.g. its T-shape, despite the advantages of providing a secure lock.

Recently, there have been efforts to invent new types of theft prevention devices for vehicles such as automobiles. One known new type has been designed to have a baseball bat shape, including a head portion and a handle grip portion. The head portion, similar to the bat head, is larger than the handle grip portion which extends lengthwise from the head portion. The head portion, which is a hollow cylindrical tube, is divided longitudinally into two equal parts. The two parts are longitudinally connected in a foldable manner with a hinge at one end region of the tube. Located at the other region of the first half of the tube is a long slot that can cover one segment of a steering wheel. At the corresponding region of the second half of the tube, there is a protrusion at a central region along the length of the long slot in the first half of the tube. This protrusion separates the long slot in the first half into two parts. Locking the steering wheel is achieved by closing the first and second halves of the tube together. The handle portion thereafter extends lengthwise from the tube or head portion and stretches out across the steering wheel in a co-planar manner, thereby preventing the steering wheel from turning.

Although with this improvement the inconvenience problem as described above with the use of e.g. T-shaped theft prevention devices has been solved, there still remains a difficulty in locking the steering wheel. In addition, this type of design does not provide sufficient locking strength due to the division of the tubular head portion into two parts.

According to the invention there is provided a theft prevention device for vehicles having a steering wheel, such as automobiles, the device comprising a hollow tubular head portion (100) including a longitudinal slot for covering and partially enclosing an annulus portion (20) of the steering wheel; a part-cylindrical rotatable steering wheel locking sleeve assembly (4) having a radius of curvature corresponding to the inner radius of the head portion and having in a middle region a locking protrusion or catch (41) adapted to act as a catch to extend behind a portion of the steering wheel in order to lock it relative to the theft prevention device, one end of the rotatable sleeve being fixed for rotation to a rotatable shaft (10) co-axial with but remote from the hollow head portion; a flange (42) on the end of the rotatable sleeve assembly (4) remote from the rotatable shaft (10) and including a stop member (5) adapted to cooperate with a lock mechanism assembly (2); the lock mechanism assembly having a protrusion (31) which can be turned by unlocking the lock mechanism assembly with a key and being co-operable with the stop member (5) to selectively engage or disengage therewith, to thereby enable the steering wheel to be reversibly locked and unlocked relative to the theft prevention device.

The theft prevention device for automobiles or the like according to the invention is intended to overcome the above-mentioned problems. The steering wheel locking mechanism is designed to include a head portion comprised of a hollow tube having a longitudinal slot that can be fitted onto a part of the steering wheel but is not divided into two parts, as in the prior art theft prevention device. When it is desired to lock the steering wheel, the slot in the head portion of the theft prevention device is placed over part of the steering wheel and the rotatable shaft, which may correspond to the handle portion of a baseball bat, is then turned such that the locking protrusion or catch then extends behind part of the steering wheel and is thereafter locked in place by the lock mechanism assembly. This is convenient to use and can be applied to steering wheels of most types, for vehicles with left-hand or right-hand steering.

The invention will now be described, by way of example only, with reference to the accompanying drawings in which:
Figure 1 shows a theft prevention device for vehicles according to the invention in a disassembled manner;
Figure 2 is a longitudinal cross-section of the assembled theft prevention device according to the invention;
Figure 3 is a perspective view of the device of Figure 2 in an unlocked condition;
Figure 4 is a perspective view of the device of Figure 2 in a locked condition;
Figure 5 is a side view of the device locked to a right-hand steering wheel; and
Figure 6 is a side view of the device locked to a left-hand steering wheel.

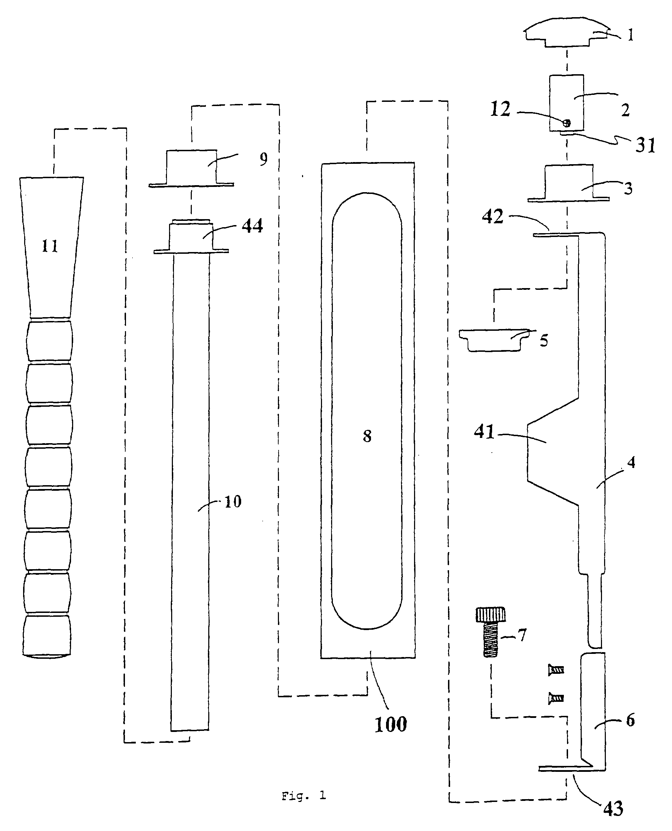

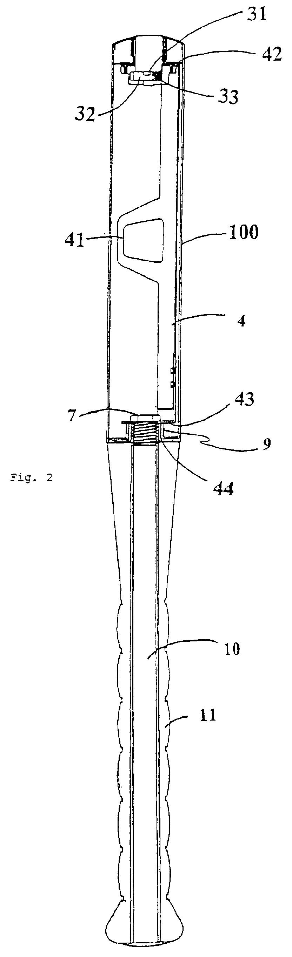

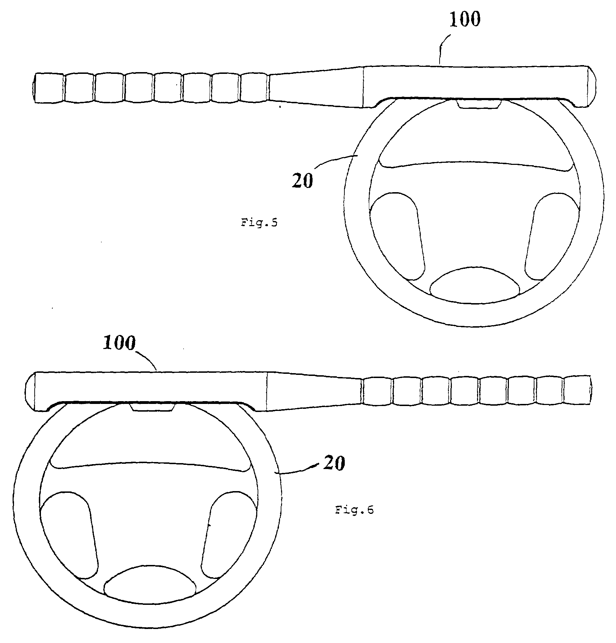

Referring firstly to Figures 1 and 2, a theft prevention device for vehicles in this example is shown in the shape of a baseball bat comprising a head portion 100 made of a strong hollow cylindrical metal tube and a handle portion 11. Within the head portion 1 there extends a longitudinal slot 8 for receiving an annulus portion of a steering wheel 20, as shown in Figures 5 and 6.

A steering wheel locking sleeve assembly 4 is made of strong metal plate having its radius of curvature corresponding to the inner radius of curvature of the head portion 100. The radius of curvature of the locking sleeve assembly 4 is about one quarter of the circumference of the head portion 100. The length of the locking sleeve assembly 4 is nearly equal to the length of the head portion 100. Located at the longitudinal middle of the locking sleeve assembly 4 is a locking protrusion or catch 41 which extends beyond the radius of curvature of the sleeve itself and is adapted to be received around part of the steering wheel 20 so as to lock the theft prevention device to it.

At the end of the locking sleeve assembly 4 adjacent to the handle 11 is a connecting portion 6 that connects it to a rotational rod or shaft 10 by an annular flange 43. A rotational shaft holding assembly or collar 9 is attached to the end of the head portion 100 adjacent to the handle 11 so as to position the rotational shaft 10 co-axially therewith. On the upper end of the shaft 10 is an insertion receptacle or ferrule 44 rotationally connected, with respect to the tube 100, to the annular flange 43 of the locking sleeve assembly 4 by a bolt 7.

An upper annular flange 42 at the other end of the locking sleeve assembly 4 has a reverse rotation stop portion 5 that supports or co-operates with a lock mechanism assembly 2 on the end of the head portion 100 remote from the handle 11. The lock mechanism assembly 2 is inserted through a lock mechanism holding portion or mounting sleeve 3 attached to the head portion 100 and is covered by a lid or cover 1 on the upper side thereof.

The rotational shaft 10 is covered and encapsulated by the handle 11 so as to fit closely thereto thereby to prevent the shaft 10 from scratching, e.g. the body, of an automobile.

The lock mechanism assembly 2 is connected to the locking mechanism mounting sleeve 3 with a bolt 12. Located at the bottom end of the lock mechanism assembly 2 is a cam-like protrusion 31 that projects from the lock shaft and can be turned by unlocking with a key (not shown). This cam-like protrusion 31 is located in a lock shaft groove 32 that is activated by a spring 33 at one side. The other side engages with a toothed portion that is located in the reverse rotation stop portion 5. This rotates the steering wheel locking sleeve assembly 4 in only one direction, e.g. clock-wise, such that it is therefore unable to be turned reversibly. Thus, when unlocked with a key, this cam-like protrusion 31 cooperates with the lock shaft groove and moves the lock shaft backwards. The lock shaft is then disengaged from the toothed portion located in the reverse rotation stop portion 5, thereby enabling the steering wheel locking sleeve 4 to be turned reversibly.

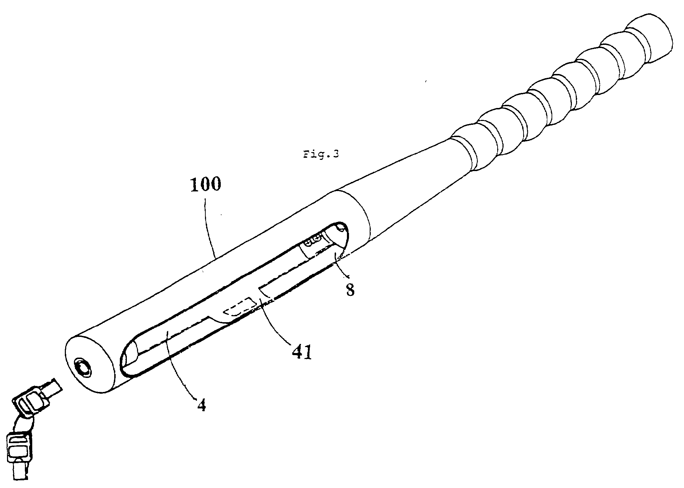

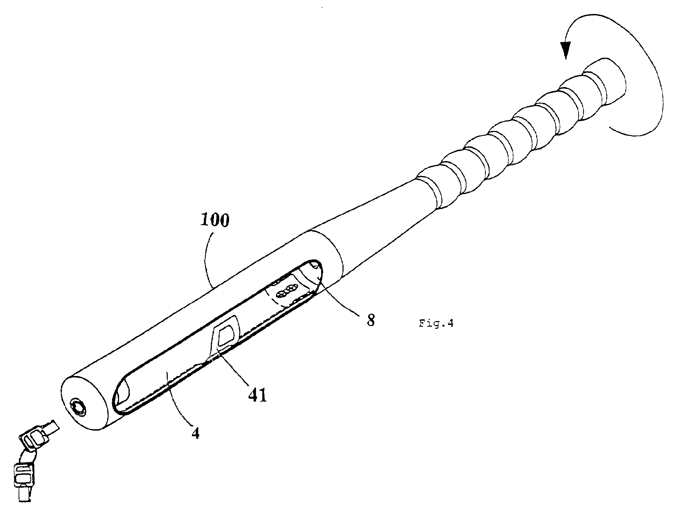

The theft prevention device for vehicles such as automobiles according to this invention is shown in Figure 3 in the unlocked position. The locking protrusion or catch 41 of the locking sleeve assembly 4 is shown in the non-protruding position within the slot 8 of the baseball bat-shaped head portion 100. When the handle portion 11 or the shaft 10 is turned clockwise, as shown in Figure 4, the catch 41 of the locking sleeve assembly 4 protrudes into the slotted region 8 and can therefore be inserted within the annulus of a steering wheel, as can be seen clearly in Figures 5 and 6, wherein the theft prevention device, in this case for automobiles, is shown in the locked position.

Figures 5 and 6 show how to use the theft prevention device according to the invention where it can be used to lock the steering wheel of both right-hand and left-hand drive vehicles.

Modifications and changes to the embodiments described by those skilled in the art are considered to be within the scope and spirit of the invention in accordance with the appended Claims.

## Claims

1. A theft prevention device for vehicles having a steering wheel, such as automobiles, the device comprising a hollow tubular head portion including a longitudinal slot for covering and partially enclosing an annulus portion of the steering wheel; a part-cylindrical rotatable steering wheel locking sleeve assembly having a radius of curvature corresponding to the inner radius of the head portion and having in a middle region a locking protrusion or catch adapted to act as a catch to extend behind a portion of the steering wheel in order to lock it relative to the theft prevention device, one end of the rotatable sleeve being fixed for rotation to a rotatable shaft co-axial with but remote from the hollow head portion; a flange on the end of the rotatable sleeve assembly remote from the rotatable shaft and including a stop member adapted to co-operate with a lock mechanism assembly; the lock mechanism assembly having a protrusion which can be turned by unlocking the lock mechanism assembly with a key and being co-operable with the stop member to selectively engage or disengage therewith, to thereby enable the steering wheel to be reversibly locked and unlocked relative to the theft prevention device.

2. A Theft prevention device according to Claim 1 further **characterised in that** the hollow tubular head portion is cylindrical.

3. A theft prevention device according to Claim 1 or Claim 2 in which the part-cylindrical rotatable steering wheel locking sleeve assembly extends along substantially the whole of the length of the tubular head portion.

4. A theft prevention device according to any preceding claim in which the locking sleeve assembly has a radius of curvature of about one quarter of the circumference of the tubular head portion, other than in the region of the locking protrusion.

5. A theft prevention device substantially as hereinbefore described with reference to the drawings.
